# EUROPEAN PATENT SPECIFICATION

(11) **EP 2 890 749 B1**
(45) Date of publication and mention of the grant of the patent: **16.05.2018**
(21) Application number: 13770989.5
(22) Date of filing: 30.08.2013
(51) Int. Cl.: C09D 4/06, C09D 167/07, C09D 133/08, E04B 1/92

(54) **DURABLE UV CURABLE COATINGS**
DAUERHAFTE UV-HÄRTBARE BESCHICHTUNGEN
REVÊTEMENTS DURABLES DURCISSABLES PAR UV

(30) Priority: 31.08.2012 US 201261695347 P
(43) Date of publication of application: 08.07.2015
(73) Proprietor: Armstrong World Industries, Inc., Lancaster, Pennsylvania 17603 (US)
(72) Inventor: TIAN, Dong, Lancaster, PA 17601 (US); LEININGER, Larry, W., Akron, PA 17501 (US); WINEY, Rebecca, L., Lancaster, PA 17603 (US)
(74) Representative: Jenkins, Peter David
(86) International application number: PCT/US2013/057623
(87) International publication number: WO 2014/036462

(56) References cited:
- EP-A1- 1 136 538
- EP-A2- 0 152 179
- WO-A1-2012/006199
- WO-A1-2012/006200
- WO-A2-2006/028518
- ARCENEAUX J A: "UV-Curable Concrete Coatings", RADTECH REPORT, NORTHBROOK, IL, US, 1 January 2009 (2009-01-01), pages 33-42, XP002613457, ISSN: 1056-0793

## Description

### Cross-Reference to Related Applications

This application claims priority to U.S. Provisional Application Serial No. 61/695,347, filed August 31, 2012 entitled "UV Curable Coating".

### Field

The present invention relates to radiation curable compositions for use in coating substrates, and more particularly to ultraviolet curable coatings for flooring and other applications.

### Background

Radiation curable coatings, such as UV curable coatings, are applied to various types of substrates to enhance their durability and finish. These radiation curable coatings are typically mixtures of resins, including oligomers and monomers that are radiation curable after being applied to the substrate. The radiation curing polymerizes and/or cross-links the resins to produce high or low gloss coatings. Radiation curable coatings are often referred to as topcoats or wear layers and are used, for example, in a wide variety of flooring applications, such as on linoleum, hardwood, resilient sheet, and tile flooring.

However, while these known coatings provide some protection to the substrate, the coatings are prone to wear causing the appearance of the floor to become less desirable. Therefore, it would be desirable to have a coating which exhibits improved stain resistance, improved scuff resistance, improved scratch resistance, and/or the ability to restore the floor using dry buffing maintenance.

### Summary

The present disclosure provides a UV curable coating comprising: an acrylate component; a photoinitiator; an amine synergist; and an abrasive.

The present invention provides a UV curable coating according to claim 1 comprising: from 65 wt. % to 85 wt. % of an acrylate component; from 0.1 wt. % to 5 wt. % of a photoinitiator; from 0.1 wt. % to 5 wt. % of an amine synergist; from 1 wt% to 10 wt% of a lubricant; and from 1 wt. % to 15 wt. % of an abrasive, wherein the acrylate component comprises a silicone acrylate; and wherein the lubricant is a wax lubricant.

Preferred features are defined in the dependent claims.

The present invention is also directed to a flooring product according to claim 5 comprising: a substrate; and a UV curable coating comprising: from 65 wt. % to 85 wt. % of an acrylate component; from 0.1 wt. % to 5 wt. % of a photoinitiator; from 0.1 wt. % to 5 wt. % of an amine synergist; from 1 wt% to 10 wt% of a lubricant; and from 1 wt. % to 15 wt. % of an abrasive, wherein the coating is applied to a major surface of the substrate, wherein the acrylate component comprises a silicone acrylate; and wherein the lubricant is a wax lubricant.

Preferred features are defined in the dependent claims.

The present invention also provides methods of improving the heel scuff resistance and/or scratch resistance of a flooring product, reducing the extent to which dirt is attracted to a surface of a flooring product, improving the cleanability of a surface of a flooring product, reducing the water-based staining of a flooring product, or reducing the volatile organic emissions from a flooring product, comprising applying to the major surface of a substrate, any one of the coatings according to the invention; and exposing the coated substrate to at least one radiation source selected from an infrared radiation source and an ultraviolet radiation source.

In some embodiments, the coating is applied to the substrate in an amount sufficient to provide a wet thickness of from 0.5 to 2 mm.

In some embodiments, the present invention provides a UV curable coating which has a hydrophobic surface.

Some aspects of the disclosure are directed to a UV curable coating which includes one or more polymer matting agents/waxes, silicone acrylates, abrasives, or any combination thereof.

Some aspects of the disclosure provide compositions comprising a monomer, an oligomer, a photo initiator, a silicone acrylate, a matting wax, an additive, or a combination of two or more thereof.

In some embodiments, the compositions are applied directly or indirectly to a substrate.

Some embodiments provide methods for restoring a surface covering by application of a composition described herein.

Some embodiments of the present invention are directed to UV curable coatings which exhibit improved stain resistance, improved scuff resistance, improved scratch resistance, the ability to restore the coating using dry buffing maintenance, or any combination thereof.

Other features and advantages of the present invention will be apparent from the following more detailed description of the preferred embodiment, taken in conjunction with the accompanying drawings which illustrate, by way of example, the principles of the invention.

### Detailed Description

As used herein, the term "UVA radiation" refers to UV radiation having the strongest wavelengths between 315-400 nm.

As used herein, the term "UVB radiation" refers to UV radiation having the strongest wavelengths between 280-315 nm.

As used herein, the term "UVC radiation" refers to UV radiation having the strongest wavelengths between 200-280 nm.

As used herein, the terms "cure" or "curing" refer to a change in state, condition, and/or structure in a material that is usually, but not necessarily, induced by at least one variable, such as time, temperature, moisture, radiation, presence and quantity in such material of a curing catalyst or accelerator, or the like. The terms cover partial as well as complete curing.

As used herein, the term "wt. %" refers to the weight percentage of the particular ingredient in the final coating composition.

Some aspects of the present disclosure provide a UV curable coating comprising: an acrylate component; a photoinitiator; an amine synergist; and an abrasive.

Some aspects of the present disclosure provide a UV curable coating comprising: from 65 wt. % to 85 wt. % of an acrylate component; from 0.1 wt. % to 5 wt. % of a photoinitiator; from 0.1 wt. % to 5 wt. % of an amine synergist; and from 1 wt. % to 15 wt. % of an abrasive, wherein the acrylate component comprises an acrylate selected from a polyester acrylate; an epoxy acrylate; a silicone acrylate; or a combination of two or more thereof.

.

Further embodiments provide coatings comprising from about 2 wt. % to about 3.5 wt. %, of a photoinitiator.

The invention provides coatings which include a lubricant. The coating includes from 1 wt. % to 10 wt. % of a lubricant. The lubricant is a wax lubricant. In some embodiments, the wax lubricant is present in an amount of from about 2 wt. % to about 10 wt. %. In some embodiments, the wax lubricant is present in an amount of from about 5 wt. % to about 9 wt. %. In some embodiments, the wax lubricant is present in an amount of from about 6 wt. % to about 8 wt. %. In some embodiments, the wax lubricant is present in an amount of from about 7 wt. % to about 8 wt. %. In some embodiments, the wax lubricant is present in an amount of about 7.5 wt. %.

In some embodiments, the coating comprises from about 70 wt. % to about 82 wt. %, of an acrylate component. In some embodiments, the coating comprises from about 75 wt. % to 80 wt. %, of an acrylate component.

Some embodiments provide coatings comprising from 2 wt. % to 3 wt. %, of an amine synergist.

Other embodiments provide coatings that further comprise a flattening agent. In some embodiments, the coating further comprises from 0.1 wt. % to 3 wt. % of a flattening agent.

In some embodiments, the coating further comprises a surfactant. In some embodiments, the coating further comprises from 0.1 wt. % to 1 wt. % of a surfactant.

Some aspects of the present disclosure provide a flooring product comprising: a substrate; and a UV curable coating comprising: from 65 wt. % to 85 wt. % of an acrylate component; from 0.1 wt. % to 5 wt. % of a photoinitiator; from 0.1 wt. % to 5 wt. % of an amine synergist; and from 1 wt. % to 15 wt. % of an abrasive, wherein the coating is applied to a major surface of the substrate, wherein the acrylate component comprises an acrylate selected from a polyester acrylate; an epoxy acrylate; a silicone acrylate; or a combination of two or more thereof.

In some aspects of the disclosure, the coating applied to a major surface of the substrate can be any one of the coatings described herein.

Some aspects of the present disclosure provide a method of improving the heel scuff resistance of a flooring product comprising applying to the major surface of a substrate, any one of the coatings described herein; and exposing the coated substrate to at least one radiation source selected from an infrared radiation source and an ultraviolet radiation source.

Other aspects of the present disclosure provide a method of improving the scratch resistance of a flooring product comprising applying to the major surface of a substrate, any one of the coatings described herein; and exposing the coated substrate to at least one radiation source selected from an infrared radiation source and an ultraviolet radiation source.

Yet other aspects of the disclosure provide a method of reducing the extent to which dirt is attracted to a surface of a flooring product comprising applying to the major surface of a substrate, any one of the coatings described herein; and exposing the coated substrate to at least one radiation source selected from an infrared radiation source and an ultraviolet radiation source.

Still further aspects of the disclosure provide a method of improving the cleanability of a surface of a flooring product comprising applying to the major surface of a substrate, any one of the coatings described herein; and exposing the coated substrate to at least one radiation source selected from an infrared radiation source and an ultraviolet radiation source.

In some aspects, the present disclosure provides a method of reducing the water-based staining of a flooring product comprising applying to the major surface of a substrate, any one of the coatings described herein; and exposing the coated substrate to at least one radiation source selected from an infrared radiation source and an ultraviolet radiation source.

Some aspects of the disclosure provide a method of reducing emission of volatile organic compounds from a substrate coated with any one of the coatings described herein, comprising: applying to the major surface of the substrate, any one of the coatings described herein; and exposing the coated substrate to at least one radiation source selected from an infrared radiation source and an ultraviolet radiation source.

In some aspects of the disclosure, the coated substrates provide a water contact angle of from about 85 degrees to about 120 degrees. In some embodiments, the coated substrates provide a surface energy of from about 6 to about 21 dyne/cm.

In some aspects of the disclosure, the coating is applied to the substrate in amount sufficient to provide a wet thickness of from about 12.7µm to 50.8µm (about 0.5 to 2 mils). In some embodiments, the coating is applied to the substrate in an amount sufficient to provide a wet thickness of about 25.4µm (1 mil). In some aspects of the disclosure, the coated substrate is exposed to a plurality of radiation sources. In some aspects of the disclosure, the coated substrate is exposed to an infrared radiation source. In some aspects of the disclosure, the coated substrate is exposed to an ultraviolet radiation source. In some embodiments, the ultraviolet radiation source is selected from a UVA radiation source; a UVB radiation source; a UVC radiation source; and combination of two or more thereof.

In some aspects of the disclosure, the acrylate component comprises an acrylate resin such as EC6360 polyester acrylate, EM 2204 tricyclodecane dimethanol diacrylate, EC6154B-80, EC6115J-80, EC6142H-80, and EC6145-100 all available from Eternal; Actilane 579 and Actilane 505 available from AkzoNobel; Roskydal TP LS 2110, Roskydal UA VP LS 2266, Roskydal UA VP LS 2380, Roskydal UA VP LS 2381 (XD042709), Roskydal UA XP 2416, Desmolux U200, Desmolux U 500 acrylate, Desmolux U680H, Desmolux XP2491, Desmolux XP2513 unsaturated aliphatic urethane acrylate, Desmolux XP 2738 unsaturated aliphatic allophanate, Desmolux P175D, Roskydal UA TP LS 2258, Roskydal UA TP LS 2265, and Roskydal UA XP 2430 all available from Bayer; CD 406 cylohexane dimethanol diacrylate, CD420, CD611, CN965, CN966 A80, CN966 J75, CN981, CN991, CN2920, CN2282, CN985B88, CN2003B, , 2-EHA, , CN 307 hydrophobic acrylate ester, CN 308 hydrophobic acrylate ester, hydrophobic acrylate ester, CN 989 aliphatic urethane acrylate oligomer, CN 9007aliphatic urethane acrylate, CN 9009 aliphatic urethane acrylate, CN 9011aliphatic urethane acrylate, CN 9014 hydrophobic urethane acrylate, SR 339 2-phenoxyethyl acrylate, SR 531 cyclic trimethylolpropane formal acrylate, SR 540 ethoxylated(4) bisphenol A dimethacrylate, SR 3010, SR 9035, SR833S tricyclodecane dimethanol dimethacrylate, SR531 2-phenoxyethyl acrylate, SR 351, SR 306, SR395, SR 238, SR399, SR324, SR257, SR-502, SR203 all available from Sartomer; Disperbyk 2008 acrylic block copolymer from BYK Chemie; Ebecryl 230, Ebecryl 270, Ebecryl 4830, Ebecryl 4833, Ebecryl 4883, Ebecryl 8402, Ebecryl 8405, Ebecryl 8411, Ebecryl 8807, and Ebecryl 809, Ebecry 114 2-phenoxyethyl acrylate, dipropylene glycol diacrylate (DPGDA), neopentyl glyco propoxylate (2) diacrylate (NPG(PO)2DA), trimethylolpropane ethoxy triacrylate (TMPEOA), isobornyl acrylate (IBOA), Ebecryl 114, and Ebecryl 381 all available from Cytec; and Polyfox 3305, PolyFox 3320, and Polyfox 3510, all available from Omnova and AR-25 polyester acrylate. AR-25 may be formed according to the procedure of Example 7 of U.S. Patent No. 5,891,582.

In some embodiments, the coatings of the present invention include a photoinitiator, which absorbs only in the UV range of the electromagnetic spectrum. As such, the photoinitiator absorbs radiation at wavelengths lying outside, or shorter than, the visible light spectrum, generally less than about 420 nm. The photoinitiator responds to such UV radiation to initiate and induce curing of the curable resin component.

Photoinitiators that may be employed include any photoinitiator known in the art and which is activated by ultraviolet radiation. The photoinitiator is usually, but not necessarily, a free radical photoinitiator. Suitable free radical photoinitiators include unimolecular (Norrish Type I and Type II), bimolecular (Type II), and biomolecular photosensitization (energy transfer and charge transfer). Exemplary free radical photoinitiators that may be employed include, but are not limited to, diphenyl ketone, 1-hydroxycyclohexyl phenyl ketone, phenyl bis (2,4,6-trimethyl benzoyl)phosphine oxide, Esacure KTO-46 (a mixture of phosphine oxide, Esacure KIP150 and Esacure TZT), 2,4,6-trimethylbenzoyldiphenyl phosphine oxide, isopropylthioxanthone, 1-chloro-4-propoxy-thioxanthone, 2,4-diethylthioxanthone, 2-chlorothioxanthone, camphorquinone, 2-ethyl anthraquinone, as well as Irgacure 1700, Irgacure 2020, Irgacure 2959, Irgacure 500, Irgacure 651, Irgacure 754, Irgacure 907, Irgacure 184 1-hydro-xyclohexyl phenyl ketone all available from BASF. Other photoinitiators that may be employed include Speedcure BP and Speedcure 84 all available from Lampson.

In some embodiments, the photoinitiator may be a benzophenone (such as, but not limited to, diphenyl ketone) or substituted benzophenone, such as, for example, an alpha-hydroxyketone. One particularly suitable alpha-hydroxyketone is 1-hydroxy-cyclohexylphenyl-ketone. Photoinitiators may be present in the coating compositions of the disclosure, for example, in an amount from about 1 wt. % to about 15 wt. % by weight in the final composition; optionally in an amount from about 2 wt. % to about 6 wt. %. The UV curable coating according to the invention includes from 0.1 wt% to 5 wt% of a photoinitiator.

Abrasives may be present in the coating compositions. Abrasives that may be employed include, but are not limited to: aluminum oxide, fluorite, apatite, feldspar, nepheline syenite, glass, quartz, ceramic, silicon nitride, silicon carbide (carborundum), tungsten carbide, titanium carbide, topaz, corundum/ sapphire (Al₂O₃), diamond, and combinations thereof. A non-limiting example of an abrasive that may be employed is PWA30 alumina from Fujimi. In some aspects of the disclosure, abrasives are present in the coating compositions, for example, in an amount from about 1 wt. % to about 20 wt. % by weight in the final composition. The UV curable coating according to the invention includes from 1 wt% to 15 wt% of an abrasive. Optionally, abrasives are present in an amount from about 1% to about 10 wt. %. Further optionally, abrasives are present in an amount from about 1 wt. % to about 6 wt. %.

Flattening agents may be present in the coating compositions. Flattening agents that may be used re usually inorganic, typically silica, although organic flattening agents or a combination of inorganic and organic materials may be used as flattening agents. Examples of such flattening agents include but are not limited to Gasil UV70C silica from Ineos Silicas. ACEMATT HK125, ACEMATT HK400, ACEMATT HK440, ACEMATT HK450, ACEMATT HK460, ACEMATT OK412, ACEMATT OK 500, ACEMATT OK520, ACEMATT OK607, ACEMATT TS100, ACEMATT 3200, ACEMATT 3300 all available from Evonik; MPP-620XXF, Polyfluo 150, Propylmatte 31 all available from Micropowders; Ceraflour 914, Ceraflour 913 all available from BYK; Gasil ultraviolet70C, Gasil HP280,
Gasil HP 860, Gasil HP 870, Gasil IJ 37, Gasil ultraviolet 55C all available from PQ Corporation.

Where a plurality of flattening agents is employed, the flattening agents may differ by chemistry (i.e., composition), particle size, particle size distribution, surface treatment, surface area and/or porosity.

Suitable amine synergists include, but are not limited to, 2-ethylhexyl-4-dimethylamino benzoate, ethyl 4-(dimethylamine) benzoate, N-methyl diethanolamine, 2-dimethylamino ethylbenzoate, and butoxyethyl-4-dimethylamino benzoate, as well as CN373, CN383, CN384, CN386 and CN 371, all available from Sartomer; Ebecry P104, Ebecry P115, Ebecry 7100 all available from Cytec; and Roskydal UA XP 2299 available from Bayer.

Generally, UV curable compositions for use as protective coatings on substrates, such as flooring may be created as either a solvent base or waterborne formulations that include a resin and a photoinitiator.

The compositions also may include one or more surfactants. Surfactants that may be employed include, but are not limited to, BYK 3530, BYK 3532, BYK 3533 and BYK 3534 from BYK Chemie.

The present invention relates to ultraviolet (UV) curable, coating compositions. Exemplary compositions of the present invention cure by exposure to UV light to form a coating for flooring, such as, but not limited to, linoleum, hardwood, resilient sheet, and tile flooring. These flooring products demonstrate, *inter alia,* improved stain resistance, improved scuff resistance, improved scratch resistance, and/or the ability to restore the floor using dry buffing maintenance.

In some aspects, the present disclosure provides coatings comprising a curable resin, a photoinitiator, a matting agent/wax, an abrasive, and a dispersing agent. In some embodiments, the coatings further comprise an antimicrobial agent. In some embodiments, the curable resin comprises an acrylate component.

The curable resin includes both a monomer and oligomer. The use of monomers reduces the viscosity of the coating prior to curing. This facilitates the manufacturing and coating process. In some aspects of the disclosure, the coatings comprise an acrylate, a tricyclodecane dimethanol diacrylate, a cyclic trimethylolpropane triacrylate, 2-phenoxythyl acrylate, a silicone acrylate or a combination of two or more thereof. In some aspects of the disclosure, the coatings comprise a polyester acrylate, an urethane acrylate, an epoxy acrylate, a silicone acrylate, a hydrophobic urethane acrylate, an aliphatic silicone acrylate, a hydrophobic acrylate ester, an amine synergist or a combination of two or more thereof.

Curable resins are present in the coating compositions, for example, in an amount from about 60% to about 90% by weight in the final composition. Desirably, curable resins are present in an amount from about 75 wt. % to about 85 wt. %. Monomers are present in the coating compositions, for example, in an amount from about 5 wt. % to about 70 wt. %. Desirably, monomers are present in an amount from about 30 wt. % to about 45 wt. %. Oligomers are present in the coating compositions, for example, in an amount from about 5 wt. % to about 70 wt. %. Desirably, oligomers are present in an amount from about 35 wt. % to about 45 wt. %.

According to the invention, at least a portion of the acrylate component comprises one or more silicone acrylates. Some embodiments provide coatings wherein the silicone acrylate is present in the coating composition, for example, in an amount from about 1 wt. % to about 30 wt. %. In some embodiments, a silicone acrylate is present in an amount from about 2 wt. % to about 10 wt. %. In some embodiments, a silicone acrylate is present in an amount from about 3 wt. % to about 7 wt. %.

Some embodiments provide coatings comprising an acrylate component comprising a silicone acrylate in the amount of from about 2 wt. % to about 10 wt. %; and a lubricant in an amount of from about 2 wt. % to about 10 wt. %. Some embodiments provide coatings comprising an acrylate component comprising a silicone acrylate in the amount of from about 3 wt. % to about 7 wt. %; and a lubricant in an amount of from about 5 wt. % to about 9 wt. %. Some embodiments provide coatings comprising an acrylate component comprising a silicone acrylate in the amount of from about 3 wt. % to about 7 wt. %; and a lubricant in an amount of from about 6 wt. % to about 8 wt. %.

The exemplary compositions of the present invention may include at least one polymer matting agent. When the composition is cured, the polymer matting agent is a solid which is provided in the coating to provide flooring polishing characteristics. In some embodiments, the polymer matting agent allows the floor to be dry buffed to restore the floor to its initial appearance. This allows the floor to be polished without the need for additional chemicals or polishes to be added.

Suitable polymer matting agents include, but are not limited to: polytetrafluoroethylene, polyethylene, polypropylene, modified polyethylene, wax polymers, hydrocarbon, biodegradable polymer based on renewable resources, natural waxes (such as, but not limited to, carnauba wax, montan wax, paraffin wax) and combinations thereof.

In some embodiments, the terms "lubricants" and "polymer matting agents" are used interchangeably.

In some embodiments, a silica matting agent may be included, for example, in an amount from about 0 wt. % to about 15 wt. %. Desirably, silica matting agents are present in an amount from about 1 wt. % to about 6 wt. %.

The exemplary compositions of the present invention may also include at least one dispersing agent. The dispersing agents include, but are not limited to: acrylic block copolymers and combinations thereof.

Dispersing agents may be present in the coating compositions, for example, in an amount from about 0.1 wt. % to about 1 wt. %. Desirably, dispersing agents are present in an amount from about 0.1 wt. % to about 0.5 wt. %.

The exemplary compositions of the present disclosure may also include an amine synergist. An amine synergist may be present in the coating compositions, for example, in an amount from about 1 wt. % to about 15 wt. %. Desirably, an amine synergist is present in an amount from about 2 wt. % to about 6 wt. %, optionally in the amount of about 2.5 wt. %.

The exemplary compositions of the present invention may optionally include wetting agents. Examples of suitable wetting agent include, but are not limited to: silicones or silicone-free surfactants, fluorocarbon surfactants and the combination thereof. Wetting agents are present in the coating compositions, for example, in an amount from about 0% to about 5 wt. %. Desirably, wetting agents are present in an amount from about 0 wt. % to about 1 wt. %.

The exemplary compositions of the present invention may optionally include an antimicrobial agent. When present, the antimicrobial agent may be present in the coating compositions, for example, in an amount from about 0 wt. % to about 3 wt. %. Desirably, antimicrobial agents are present in an amount from about 0.1 wt. % to about 1 wt. %.

In accordance with the present invention, the UV curable compositions may be applied to a surface of flooring, such as, but not limited to linoleum, hardwood, resilient sheet, and tile flooring to form a coating thereon. Upon exposure to UV light, the compositions of the present invention cure to a coating that imparts improved stain resistance, improved scuff resistance, improved scratch resistance, and/or the ability to restore the floor using dry buffing maintenance.

Without being bound by theory, it is believed that in some embodiments, the combination of a silicone acrylate and a polymer matting agent contributes to the improved stain resistance demonstrated by the coatings of the present invention. In some embodiments, the coating forms a hydrophobic surface which resists water based stains, captures less dirt and is easily cleaned or maintained using dry buffing.

In some embodiments, the coatings of the present invention provide a reduction in VOC emissions from a substrate coated therewith. In some embodiments, the substrate is a cellulosic substrate. In some embodiments, the substrate is a wood plank. In some embodiments, the substrate is selected from linoleum, hardwood, resilient sheet, and tile. In some embodiments, the substrate is vinyl tile.

The invention will be described in greater detail by way of specific examples. The following examples are offered for illustrative purposes and are not intended to limit the invention in any manner. Those skilled in the art will readily recognize a variety of noncritical parameters which can be changed or modified to yield essentially the same results.

### Examples

### Example 1

Described in Table 1 (below) are five (5) exemplary coatings of the present disclosure. Coatings I and II are reference coatings not in accordance with the present claims. These coatings were prepared by conventional means, readily understood by those skilled in the art.

**Table 1**

| | **I** | **II** | **III** | **IV** | **V** |
|---|---|---|---|---|---|
| **Ingredient** | **Wt. %** | | | | |
| Polyester acrylate | 14.73 | 14.53 | 17.24 | 14.5 | 15.32 |
| Modified Epoxy Acrylate | 22.10 | 21.79 | 17.24 | 21.79 | 15.32 |
| Acrylate | 7.37 | 7.26 | 6.90 | 7.26 | 6.13 |
| Tricyclodecane dimethanol diacrylate | 14.73 | 14.53 | 13.79 | 14.53 | 12.26 |
| Cyclic Trimethylolpropane Formal Acrylate | 6.63 | 6.54 | 6.21 | 6.54 | 5.51 |
| Trimethylolpropane Triacrylate | 5.16 | 5.08 | 4.83 | 5.08 | 4.29 |
| 2-Phenoxythyl Acrylate | 6.63 | 6.54 | 6.21 | 6.54 | 5.51 |
| Silicone Acrylate | -- | -- | 6.90 | 3.63 | 6.13 |
| Amine Synergist | 3.68 | 3.63 | 2.45 | 2.47 | 2.18 |
| Surfactant | 2.50 | 2.47 | 0.66 | 0.66 | 0.59 |
| Diphenyl ketone | 0.67 | 0.66 | 2.55 | 2.57 | 2.26 |
| 1-Hydroxy-cyclohexyl phenyl ketone | 2.61 | 2.57 | 0.64 | 0.64 | 0.57 |
| Wax lubricant | 0.65 | 0.64 | 7.44 | 7.50 | 6.61 |
| Silica | 0.44 | 1.31 | 2.65 | 1.97 | 2.35 |
| Aluminum Oxide | 7.60 | 7.50 | 3.97 | 3.99 | 14.15 |
| Acrylic Block-copolymer | 0.22 | 0.65 | 0.33 | 0.30 | 0.82 |

### Example 2

Coatings of the present invention are evaluated against acrylate coatings which do not contain the combination of elements provided by embodiments of the present invention for their ability to resist heel scuff. Specifically, the coatings are applied to a substrate and are evaluated according to ease of scuffing and the ease with which a scuff is removed. The data described in Table 2 (below) demonstrates that the coatings of the present invention (III-V) provide an acceptable level of heel scuff resistance while comparative acrylate coatings which do not contain the inventive combination of ingredients (CI-CV) do not. "P" represents an acceptable level of heel scuff resistance, while "F" represents an unacceptable level of heel scuff resistance. In addition, it is worth noting that the comparative acrylate coatings were much easier to scuff than the coatings of the present invention.

**Table 2**

| **Coating** | **I** | **II** | **III** | **IV** | **V** | **CI** | **CII** | **CIII** | **CIV** | **CV** |
|---|---|---|---|---|---|---|---|---|---|---|
| | | | | | | | | | | |
| Heel Scuff Resistance Test Results | P | P | P | P | P | F | F | F | F | F |

### Example 3

Coatings of the present invention are evaluated against acrylate coatings which do not contain the combination of elements provided by embodiments of the present invention for their ability to resist abrasion. Specifically, the coatings are applied to a substrate and each coated substrate is exposed to 320 grit sandpaper in a Byk Gardner Abrasion Tester for thirty (30) cycles. Gloss measurements are taken prior to and after the 30 cycles are completed. Pre-exposure and post-exposure gloss readings are compared and a percentage gloss retention is calculated.

The data described in Table 3 (below) demonstrates that the coatings of the present invention (II-V) provide an acceptable level of abrasion/scratch resistance while comparative acrylate coatings which do not contain the inventive combination of ingredients (CI-CV) do not.

**Table 3**

| **Coating** | **I** | **II** | **III** | **IV** | **V** | **CI** | **CII** | **CIII** | **CIV** | **CV** |
|---|---|---|---|---|---|---|---|---|---|---|
| | | | | | | | | | | |
| % Gloss Retention | 102.7 | 87.4 | 107 | 99 | 105 | 52 | 56 | 39 | 40 | 40 |

### Example 4

Coatings of the present invention are evaluated against acrylate coatings which do not contain the combination of elements provided by embodiments of the present invention to compare the hydrophobicity of a substrate coated therewith. Specifically, the coatings are applied to a substrate and the water contact angle and surface energy of the coated surfaces are measured. The data described in Table 4 (below) demonstrate that the coatings of the present invention (III-IV) provide a greater water contact angle and lower surface energy than the comparative acrylate coatings which do not contain the inventive combination of ingredients (CI-CV). The increased water contact angle and the reduced surface energy demonstrated by exemplary coatings of the present invention result in a coated surface that provides reduced dirt attraction, improved cleanability and minimized water-based staining.

**Table 4**

| **Coating** | **III** | **IV** | **CI** | **CII** | **CIII** | **CIV** | **CV** |
|---|---|---|---|---|---|---|---|
| | | | | | | | |
| Water Contact Angle (degrees) | 102.84 | 95.11 | 71.46 | 83.85 | 73.02 | 69.02 | 69.53 |
| Surface Energy (dyne/cm) | 11.01 | 15.11 | 31.61 | 22.31 | 30.38 | 33.57 | 33.16 |

### Example 5

An exemplary coating of the present invention (V) is evaluated (ASTM D6007-02 (2008)) against an acrylate coating which does not contain the combination of elements provided by embodiments of the present invention (CVI) for volatile organic compound (VOC) emissions. Both coatings are applied to a thickness of about 51 µm (2 mils) and cured with a UVA 1.103 J/cm² - UVC 0.171 J/cm². The data described in Table 5 (below) demonstrates that coatings of the present invention provide a greater than five-fold reduction in VOC emissions from a wood substrate coated therewith.

**Table 5**

| **Coating** | **V** | **CVI** |
|---|---|---|
| | Formaldehyde Concentration in Air | |
| Ppm | BLQ | 0.03 |
| mg/(m²h) | 0.003 | 0.017 |

### Example 6

An exemplary coating of the present invention (V) is evaluated in a FLEC test against an acrylate coating which does not contain the combination of elements provided by embodiments of the present invention (CVII) for total volatile organic compound (TVOC) emissions after twenty-eight (28) days. Both coatings are applied to a thickness of about 2 mm. The data described in Table 6 (below) demonstrates that coatings of the present invention provide a greater than three-fold reduction in TVOC emissions from a resilient sheet coated therewith.

**Table 6**

| **Coating** | **V** | **CVII** |
|---|---|---|
| TVOC after 28 Days (5µg/m²h) | 10 | 35 |

## Claims

1. A UV curable coating comprising:
from 65 wt. % to 85 wt. % of an acrylate component;
from 0.1 wt. % to 5 wt. % of a photoinitiator;
from 0.1 wt. % to 5 wt. % of an amine synergist;
from 1 wt. % to 10 wt. % of a lubricant; and
from 1 wt. % to 15 wt. % of an abrasive,
wherein the acrylate component comprises a silicone acrylate; and
wherein the lubricant is a wax lubricant.

2. The coating of claim 1, comprising from 5 wt. % to 9 wt. % of the lubricant, and wherein the silicone acrylate is present in an amount from 3 wt. % to 7 wt. % by weight of the coating.

3. The coating of claim 1 or claim 2, further comprising from 0.1 wt. % to 3 wt. % of a flattening agent.

4. The coating of any foregoing claim, further comprising from 0.1 wt. % to 1 wt. % of a surfactant.

5. A flooring product comprising:
a substrate; and
a UV curable coating comprising:
from 65 wt. % to 85 wt. % of an acrylate component;
from 0.1 wt. % to 5 wt. % of a photoinitiator;
from 0.1 wt. % to 5 wt. % of an amine synergist;
from 1 wt. % to 10 wt. % of a lubricant; and
from 1 wt. % to 15 wt. % of an abrasive;
wherein the coating is applied to a major surface of the flooring product,
wherein the acrylate component comprises a silicone acrylate; and
wherein the lubricant is a wax lubricant.

6. The product of claim 5, wherein the coating comprises from 2 wt. % to 3.5 wt. % of the photoinitiator.

7. The product of claim 5 or claim 6, wherein the coating comprises from 5 wt. % to 9 wt. % of the lubricant, and wherein the silicone acrylate is present in an amount from 3 wt. % to 7 wt. % by weight of the coating.

8. The product of claim 7, wherein the coating comprises from 6 wt. % to 8 wt. % of the lubricant.

9. The product of any one of claims 5 to 8, wherein the coating further comprises from 0.1 wt. % to 3 wt. % of a flattening agent.

10. The product of any one of claims 5 to 9, wherein the coating comprises from 3 wt. % to 5 wt. % of the abrasive.

11. A method of improving the heel scuff resistance of a flooring product, improving the scratch resistance of a flooring product, reducing the extent to which dirt is attracted to a surface of a flooring product, improving the cleanability of a surface of a flooring product, reducing the water-based staining of a flooring product, or reducing the volatile organic emissions from a flooring product, comprising applying to the major surface of a substrate, the coating of any one of claims 1 to 4; and exposing the coated substrate to at least one radiation source selected from an infrared radiation source and an ultraviolet radiation source.

12. The method of improving the heel scuff resistance of a flooring product, improving the scratch resistance of a flooring product, reducing the extent to which dirt is attracted to a surface of a flooring product, improving the cleanability of a surface of a flooring product, reducing the water-based staining of a flooring product, or reducing the volatile organic emissions from a flooring product of claim 11, wherein the coating is applied to the substrate in an amount sufficient to provide a wet thickness of from 0.5 to 2 mm.

13. The method of claim 11 or claim 12, wherein the ultraviolet radiation source is selected from a UVA radiation source; a UVB radiation source; a UVC radiation source; and combination of two or more thereof.

## Patentansprüche

1. UV-härtbare Beschichtung, umfassend:
von 65 Gew.-% bis 85 Gew.-% einer Acrylat-Komponente;
von 0,1 Gew.-% bis 5 Gew.-% eines Photoiniators;
von 0,1 Gew.-% bis 5 Gew.-% eines Amin-Synergisten;
von 1 Gew.-% bis 10 Gew.-% eines Gleitmittels und
von 1 Gew.-% bis 15 Gew.-% eines Schleifmittels,
wobei die Acrylat-Komponente ein Silikonacrylat umfasst und
wobei das Gleitmittel ein Wachs-Gleitmittel ist.

2. Beschichtung nach Anspruch 1, die von 5 Gew.-% bis 9 Gew.-% des Gleitmittels umfasst, und wobei das Silikonacrylat in einer Menge von 3 Gew.-% bis 7 Gew.-%, bezogen auf das Gewicht der Beschichtung, vorliegt.

3. Beschichtung nach Anspruch 1 oder 2, die weiterhin von 0,1 Gew.-% bis 3 Gew.-% eines Mattierungsmittels umfasst.

4. Beschichtung nach einem vorhergehenden Anspruch, die weiterhin von 0,1 Gew.-% bis 1 Gew.-% eines Tensids umfasst.

5. Bodenbelagsprodukt, umfassend:
ein Substrat und
eine UV-härtbare Beschichtung, umfassend:
von 65 Gew.-% bis 85 Gew.-% einer Acrylat-Komponente;
von 0,1 Gew.-% bis 5 Gew.-% eines Photoiniators;
von 0,1 Gew.-% bis 5 Gew.-% eines Amin-Synergisten;
von 1 Gew.-% bis 10 Gew.-% eines Gleitmittels und
von 1 Gew.-% bis 15 Gew.-% eines Schleifmittels,
wobei die Beschichtung auf eine Hauptoberfläche des Bodenbelagsprodukts aufgebracht wird,
wobei die Acrylat-Komponente ein Silikonacrylat umfasst und
wobei das Gleitmittel ein Wachs-Gleitmittel ist.

6. Produkt nach Anspruch 5, wobei die Beschichtung von 2 Gew.-% bis 3,5 Gew.-% des Photoinitiators umfasst.

7. Produkt nach Anspruch 5 oder 6, wobei die Beschichtung von 5 Gew.-% bis 9 Gew.-% des Gleitmittels umfasst und wobei das Silikonacrylat in einer Menge von 3 Gew.-% bis 7 Gew.-%, bezogen auf das Gewicht der Beschichtung, vorliegt.

8. Produkt nach Anspruch 7, wobei die Beschichtung von 6 Gew.-% bis 8 Gew.-% des Gleitmittels umfasst.

9. Produkt nach einem der Ansprüche 5 bis 8, wobei die Beschichtung weiterhin von 0,1 Gew.-% bis 3 Gew.-% eines Mattierungsmittels umfasst.

10. Produkt nach einem der Ansprüche 5 bis 9, wobei die Beschichtung weiterhin von 3 Gew.-% bis 5 Gew.-% des Schleifmittels umfasst.

11. Verfahren zur Verbesserung der Absatzstrichbeständigkeit eines Bodenbelagsprodukts, Verbesserung der Kratzfestigkeit eines Bodenbelagsprodukts, Verringerung des Ausmaßes, in dem Schmutz von einer Oberfläche eines Bodenbelagsprodukts angezogen wird, Verbesserung der Reinigungsfähigkeit einer Oberfläche eines Bodenbelagsprodukts, Verringerung der wasserbasierten Fleckenbildung auf einem Bodenbelagsprodukt oder Verringerung der flüchtigen organischen Emissionen von einem Bodenbelagsprodukt, wobei das Verfahren das Aufbringen der Beschichtung nach einem der Ansprüche 1 bis 4 auf die Hauptoberfläche eines Substrats und das Aussetzen des beschichteten Substrats gegenüber mindestens einer Strahlungsquelle, die aus einer Infrarotstrahlungsquelle und einer Ultraviolettstrahlungsquelle ausgewählt ist, umfasst.

12. Verfahren zur Verbesserung der Absatzstrichbeständigkeit eines Bodenbelagsprodukts, Verbesserung der Kratzfestigkeit eines Bodenbelagsprodukts, Verringerung des Ausmaßes, in dem Schmutz von einer Oberfläche eines Bodenbelagsprodukts angezogen wird, Verbesserung der Reinigungsfähigkeit einer Oberfläche eines Bodenbelagsprodukts, Verringerung der wasserbasierten Fleckenbildung auf einem Bodenbelagsprodukt oder Verringerung der flüchtigen organischen Emissionen von einem Bodenbelagsprodukt nach Anspruch 11, wobei die Beschichtung auf das Substrat in einer Menge aufgebracht wird, die dazu ausreicht, eine Nassdicke von 0,5 bis 2 mm bereitzustellen.

13. Verfahren nach Anspruch 11 oder 12, wobei die Ultraviolettstrahlungsquelle aus einer UVA-Strahlungsquelle; einer UVB-Strahlungsquelle; einer UVC-Strahlungsquelle und einer Kombination von zwei oder mehr davon ausgewählt ist.

## Revendications

1. Revêtement durcissable par UV comprenant :
65 % à 85 % en poids d'un composant acrylate ;
0,1 % à 5 % en poids d'un photo-initiateur ;
0,1 % à 5 % en poids d'un synergiste aminé ;
0,1 % à 10 % en poids d'un lubrifiant ; et
0,1 % à 15 % en poids d'un agent abrasif,
dans lequel le composant acrylate comporte un acrylate de silicone ; et
dans lequel le lubrifiant est un lubrifiant à base de cire.

2. Revêtement selon la revendication 1, comprenant 5 % à 9% en poids du lubrifiant, et dans lequel l'acrylate de silicone est présent selon une proportion de 3 % à 7 % en poids du revêtement.

3. Revêtement selon, soit la revendication 1, soit la revendication 2, comprenant en outre 0,1 % à 3 % en poids d'un agent aplatisseur.

4. Revêtement selon l'une quelconque des revendications précédentes, comprenant en outre 0,1 % à 1 % en poids d'un tensioactif.

5. Produit de revêtement de sol comprenant :
un substrat ; et
un revêtement durcissable par UV comprenant : 65 % à 85 % en poids d'un composant acrylate ;
0,1 % à 5 % en poids d'un photo-initiateur ;
0,1 % à 5 % en poids d'un synergiste aminé ;
0,1 % à 10 % en poids d'un lubrifiant ; et
0,1 % à 15 % en poids d'un agent abrasif,
dans lequel le revêtement est appliqué sur une surface principale du produit de revêtement de sol,
dans lequel le composant acrylate comporte un acrylate de silicone ; et
dans lequel le lubrifiant est un lubrifiant à base de cire.

6. Produit selon la revendication 5, dans lequel le revêtement comprend 2 % à 3,5 % en poids du photo-initiateur.

7. Produit selon, soit la revendication 5, soit la revendication 6, dans lequel le revêtement comprend 5 % à 9 % en poids du lubrifiant, et dans lequel l'acrylate de silicone est présent selon une proportion de 3 % à 7 % en poids du revêtement.

8. Produit selon la revendication 7, dans lequel le revêtement comprend 6 % à 8 % en poids du lubrifiant.

9. Produit selon l'une quelconque des revendications 5 à 8, dans lequel le revêtement comprend en outre 0,1 % à 3 % d'un agente aplatisseur.

10. Produit selon l'une quelconque des revendications 5 à 9, dans lequel le revêtement comprend 3 % à 5 % en poids de l'agent abrasif.

11. Procédé pour améliorer la résistance aux marques de talons d'un produit de revêtement, améliorer la résistance aux rayures d'un produit de revêtement de sol, réduire le pourcentage d'attraction de la poussière sur une surface d'un produit de revêtement de sol, améliorer la propreté d'une surface d'un produit de revêtement de sol, réduire les taches à base d'eau sur un produit de revêtement de sol, ou réduire les émissions de composés organiques volatils d'un produit de revêtement de sol, comprenant l'application sur la surface principale d'un substrat, le revêtement selon l'une quelconque des revendications 1 à 4 ; et l'exposition du substrat revêtu à au moins une source de rayonnement sélectionnée parmi une source de rayonnement infrarouge et une source de rayonnement ultra-violet.

12. Procédé pour améliorer la résistance aux marques de talons d'un produit de revêtement, améliorer la résistance aux rayures d'un produit de revêtement de sol, réduire le pourcentage d'attraction de la poussière sur une surface d'un produit de revêtement de sol, améliorer la propreté d'une surface d'un produit de revêtement de sol, réduire les taches à base d'eau sur un produit de revêtement de sol, ou réduire les émissions de composés organiques volatils d'un produit de revêtement de sol selon la revendication 11, dans lequel le revêtement est appliqué sur un substrat selon une proportion suffisante pour créer une épaisseur au mouillé de 0,5 à 2 mm.

13. Procédé selon, soit la revendication 11, soit la revendication 12, dans lequel la source de rayonnement ultra-violet est sélectionnée parmi une source de rayonnement UVA , une source de rayonnement UVB ; une source de rayonnement UVC ; et une combinaison de deux ou de plusieurs de celles-ci.
